## Europäisches Patentamt
## European Patent Office
## Office européen des brevets

(11) Veröffentlichungsnummer: **0 148 460**
**B1**

(12) # EUROPÄISCHE PATENTSCHRIFT

(45) Veröffentlichungstag der Patentschrift:
20.05.87

(51) Int. Cl.⁴: **H 04 N 11/04**

(21) Anmeldenummer: **84115588.0**

(22) Anmeldetag: **17.12.84**

(54) Anordnung zur Übertragung von Fernseh-Komponentensignalen.

(30) Priorität: **22.12.83 DE 3346514**

(43) Veröffentlichungstag der Anmeldung:
**17.07.85 Patentblatt 85/29**

(45) Bekanntmachung des Hinweises auf die Patenterteilung:
**20.05.87 Patentblatt 87/21**

(84) Benannte Vertragsstaaten:
**AT BE CH DE FR GB IT LI NL SE**

(56) Entgegenhaltungen:
**REVIEW OF THE ELECTRICAL COMMUNICATION LABORATORIES, Band 27, Nr. 11-12, November/Dezember 1979, Seiten 1078-1094, Tokyo, JP; K. SAWADA u.a.: "NTSC color TV component separation DPCM coding system"**

(73) Patentinhaber: **Siemens Aktiengesellschaft Berlin und München, Wittelsbacherplatz 2, D-8000 München 2 (DE)**

(72) Erfinder: **Grallert, Hans-Joachim, Dr., Tannenfleckstrasse 30, D-8038 Gröbenzell (DE)**
Erfinder: **Liegl, Werner, Dipl.-Ing., Blumenstrasse 4, D-8061 Schwabhausen (DE)**

EP 0 148 460 B1

## Beschreibung

Die Erfindung bezieht sich auf eine Anordnung zur Übertragung von in Luminanz und Chrominanz getrennten synchronen Fernseh-Komponentensignalen mit Codierern, die die Luminanz- und Chrominanz-Signale in Codewörter variabler Länge umsetzen, und mit Decodierern, die die Codewörter variabler Länge wieder rückumsetzen.

Eine Codierung mit variablen Codewortlängen ist aus den NTG-Fachberichten 84, ""Neue Aspekte der Informations- und Systemtheorie", VDE-Verlag GmbH, Berlin-Offenbach, 1983, Seiten 219 bis 225 oder aus Review of the Electrical Communication Laboratories Bd. 27, Nummern 11-12, Nov.-Dec. 1979, Seiten 1078-1094 bekannt. Bei einer derartigen Codierung kann beim Auftreten von Übertragungsfehlern die Wortsynchronisation verlorengehen. Dies bedeutet, daß empfangsseitig die Codewörter nicht mehr trennbar sind. Würden derart codierte Luminanz- und Chrominanz-Signale wortweise verschachtelt, dann würde beim Auftreten eines Bitfehlers sich dessen Folgen auf beide Signalarten auswirken.

Aus der Literaturstelle "Review of the Electrical Communication Laboratories", Vol. 27, Nr. 11-12, Nov.-Dez. 1979, Seiten 1095 bis 1112, insbesondere Fig. 12 ist ein Übertragungssystem für Fernsehsignale bekannt. Bei diesem dient ein erster Quantisierer je nach Coderegel zur Erzeugung von vierstelligen oder achtstelligen DPCM-Codewörtern. Die sendeseitige Umschaltersteuerung zählt die in einem Meßzeitraum auftretenden achtstelligen DPCM-Codewörter und schaltet nach Erreichung einer gewissen Anzahl einen anderen Quantisierer ein, der vierstellige DPCM-Codewörter erzeugt. Bei diesem System wird bei bevorstehendem Pufferüberlauf auf den Quantisierer mit gröberer Kennlinie umgeschaltet.

Aus der deutschen Offenlegungsschrift 33 14 384 ist weiter ein Übertragungssystem bekannt, bei dem in einer DPCM-Schleife ein erster Quantisierer für Codewörter einer Länge von bis zu sechs Bits und ein zweiter Quantisierer für Codewörter einer Länge von drei Bits angeordnet sind. Nach jeder Umsetzung wird aufgrund der Anzahl noch vorhandener Speicherplätze der Quantisierer für das nächste am Eingang anliegende PCM-Codewort gewählt.

Aufgabe der Erfindung ist es, eine Verschachtelungsart anzugeben, bei der sich Bitfehler nur jeweils entweder auf das Luminanz- oder auf das Chrominanz-Signal auswirken.

Ausgehend von einer Anordnung der einleitend geschilderten Art wird diese Aufgabe erfindungsgemäß dadurch gelöst, daß sendeseitig ein Multiplexer vorgesehen ist, der von den Codierern gesteuert, die Luminanz- und Chrominanz-Signale in Pulsrahmen verschachtelt, die für beide Signalarten alternierend einen oder mehrere feste Plätze enthalten, und daß empfangsseitig ein Demultiplexer vorgesehen ist, der die Luminanz- und Chrominanz-Signale wieder trennt.

Die Erfindung beruht auf der Erkenntnis, daß Bitfehler in einer Signalart sich nicht auf die andere Signalart auswirken, weil beide Signalarten in Abhängigkeit von der Anzahl der bei den Decodern empfangenen Bits getrennt werden.

Vorteilhaft ist es, wenn die Abtastrate der Luminanz-Signale ein ganzzahliges Vielfaches m/n der Abtastrate dar Chrominanz-Signale ist und wenn ein Pulsrahmen gewählt ist, in dem auf je m bit Luminanz-Signal je n bit Chrominanz-Signal folgen.

Anhand eines Ausführungsbeispiels wird die Erfindung nachstehend näher erläutert.

Figur 1 zeigt eine erfindungsgemäße Anordnung und

Figur 2 zeigt einen Pulsrahmen für das mit der Anordnung nach Figur 1 zu übertragende Zeitmultiplexsignal.

Figur 3 zeigt detailliert einen Codeumsetzer für einen Codierer für Luminanz- oder Chrominanzfarbdifferenz-Signale,

Figur 4 zeigt detailliert einen Multiplexerteil für Luminanz- oder Chrominanzfarbdifferenz-Signale,

Figur 5 zeigt detailliert einen Multiplexer,

Figur 6 zeigt detailliert einen Demultiplexer,

Figur 7 zeigt detailliert einen Demultiplexerteil für Luminanz- oder Chrominanzfarbdifferenz-Signale und

Figur 8 zeigt detailliert einen Codeumsetzer für einen Decoder für Luminanz- oder Chrominanzfarbdifferenz-Signale.

In den Figuren sind die Bezugszeichen stets dreistellig. Die erste Ziffer zeigt die Figur an, in der das Bezugszeichen erstmals verwendet wurde. Mit einem * versehene Ziffern geben an, wieviele Leitungen parallel vorhanden sind.

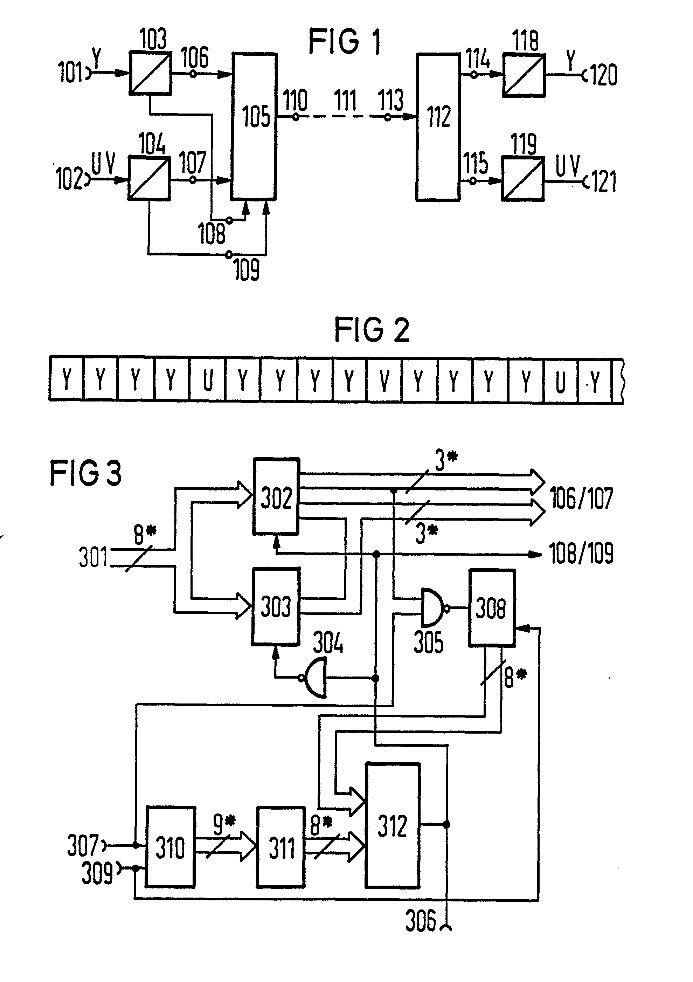

Die Anordnung nach Figur 1 enthält einen Eingang 101 für ein Y-Signal, einen Eingang 102 für abwechselnd ein U- und ein V-Signal, Codierer 103 und 104, einen Multiplexer 105, eine Übertragungsstrecke 111, einen Demultiplexer 112, Decodierer 118 und 119, einen Ausgang 120 für das Y-Signal und einen Ausgang 121 für das U- und das V-Signal. Die Übertragungsstrecke 111 besteht aus vier parallelen Leitungen.

Ein am Eingang 101 anliegendes Luminanz-Signal wird im Codierer 103 in Codewörter variabler Länge umgesetzt. Dasselbe geschieht mit den Chrominanzfarbdifferenz-Signalen U und V alternierend im Codierer 104. Beide Arten von Codewörtern variabler Länge werden den Eingängen des Multiplexers 105 zugeführt.

Der Pulsrahmen des Multiplexers 105 ist nach Figur 2 organisiert. Er gilt für jede der vier parallelen Leitungen 111. Auf vier Luminanzbits Y folgt entweder ein Chrominanzbit U oder ein Chrominanzbit V. Der Multiplexer 105 wird dabei durch die Codierer 103 und 104 gesteuert. Die Wortgrenzen der Luminanz-Codewörter können an beliebiger Stelle in den Vierer-Blöcken der Y-Bits liegen.

Auf der Empfangsseite erfolgt im Demultiplexer 112 die Trennung der Luminanz- und Chrominanzfarbdifferenz-Signale. Die Decodierer 118 und 119 setzen die Codewörter variabler Länge wieder in Y-Signale am Ausgang 120 und in U- und V-Signale am Ausgang 121 um.

Auf diese Weise sind die Luminanz- und die Chrominanz-Komponente empfangsseitig sicher zu trennen, auch dann, wenn die Wortsynchronisation der einzelnen Komponenten verlorengeht. Ein Übersprechen von Fehlern im Luminanz-Kanal auf den Chrominanz-Kanal und umgekehrt, ist nicht möglich.

Pufferspeicher, beispielsweise zum Ausgleich unregelmäßiger Datenströme aus den Codierern 103 und 104, müssen bei der erfindungsgemäßen Verschachtelungsweise nur eine minimale Länge aufweisen.

Figur 3 zeigt einen Codeumsetzer, der sich an eine in den bereits genannten Druckschriften "Review of the Electrical Communication Laboratories" oder DE-OS 33 14 384 beschriebene DPCM-Schleife mit zwei Quantisierern anschließt.

Die Anordnung enthält programmierbare Festwertspeicher (PROM) 302 und 303 des Typs 24S41, einen Zähler 308, bestehend aus zwei integrierten Schaltungen des Typs 74LS161, einen Inverter 304 und ein NAND-Gatter 305. Weiter enthält sie eine Umschaltsteuerung mit Zähler 310, realisiert aus drei integrierten Schaltungen 74LS161, mit einem programmierbaren Festwertspeicher (PROM) 311 des Typs 28S42 und mit einem Vergleicher 312 in Form einer integrierten Schaltung des Typs 74LS684.

Am Eingang 301 liegen die aus der DPCM-Schleife kommenden Codewörter an, die hier 8-bit-Codewörter sein sollen. Diese werden, wenn sie aus dem einen Quantisierer stammen, im programmierbaren Festwertspeicher 302 in ein 3- oder 6-bit-Codewort, oder, wenn sie aus dem anderen Quantisierer stammen, in dem programmierbaren Festwertspeicher 303 in ein 3-bit-Codewort umgesetzt.

Der Ausgang 106/107 besteht aus sechs Datenleitungen und einer Signalisierungsleitung 108/109, die den nachfolgenden Schaltungen mitteilt, ob das auf den Datenleitungen anliegende Codewort im programmierbaren Festwertspeicher 302 oder im programmierbaren Festwertspeicher 303 umgesetzt wurde.

Der Zähler 308 wird zu Beginn einer Bildzeile durch einen am Eingang 309 anliegenden Zeilenimpuls zurückgesetzt. Mit dem am Eingang 307 anliegenden Worttakt und dem NAND-Gatter 305 zählt der Zähler 308 die Anzahl der 6-bit-Codewörter. Der Zählerausgang gibt stets die Anzahl der in der aktuellen Zeile bereits codierten 6-bit-Codewörter an den Vergleicher 312 weiter.

Der Zähler 310 zählt die Anzahl der in einer Bildzeile bereits codierten Codewörter. Er wird zu Beginn jeder Bildzeile durch den am Eingang 309 anliegenden Zeilenimpuls zurückgesetzt und zählt mit Hilfe des am Eingang 307 anliegenden Worttaktes. Der Ausgang des Zählers 310 ist mit dem Eingang des programmierbaren Festwertspeichers 311 verbunden, dessen Ausgang anzeigt, wieviele 6-bit-Codewörter bis zum aktuellen Bildpunkt in der Bildzeile zugelassen sind. Der Vergleicher 312 vergleicht die Anzahl der zugelassenen 6-bit-Codewörter mit der Anzahl der am Ausgang des Zählers 308 tatsächlich aufgetretenen Codewörter. Ist deren Anzahl größer als die am Ausgang des programmierbaren Festwertspeichers 311, so gibt der Vergleicher 312 ein Signal an den Anschluß 306 ab. Dieses Signal bewirkt, daß der Umschalter in der DPCM-Schleife auf den anderen Quantisierer umschaltet. Gleichzeitig teilt es den programmierbaren Festwertspeichern 302 und 303 mit, daß das nächste Codewort mit drei bit zu codieren ist.

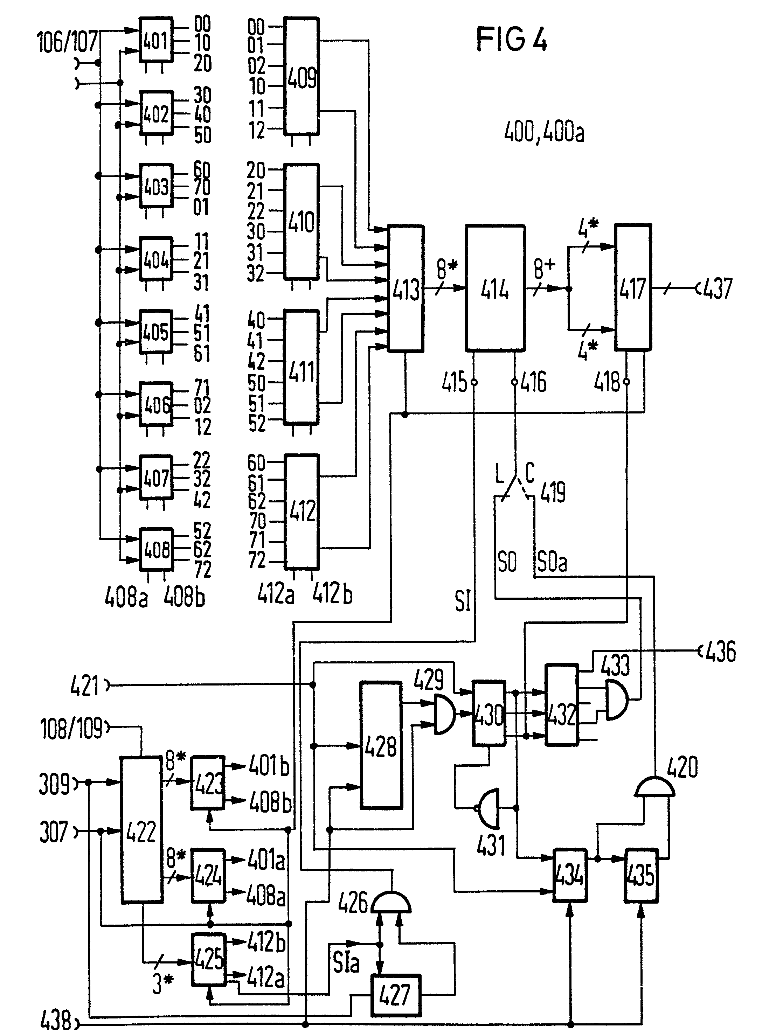

Figur 4 zeigt einen Multiplexerteil 400, 400a für Luminanz- oder Chrominanzfarbdifferenz-Signale. Jeweils ein Multiplexerteil für eine Signalart wird für den gesamten Multiplexer 105 benötigt. Im Betrieb unterscheiden sich die Multiplexerteile für beide Signalarten dadurch, daß die Frequenz des Worttaktes des Chrominanzfarbdifferenz-Signals einem Viertel der Frequenz des Worttaktes des Luminanz-Signals entspricht.

Der Multiplexerteil enthält acht Untermultiplexer 401 bis 408 des Typs 74LS399. Der SEL (select)-Eingang jedes Untermultiplexers 401 bis 408 ist mit dessen Bezugszeichen und einem a versehen. Das Bezugszeichen des jeweiligen Takteinganges ist das Bezugszeichen des Untermultiplexere mit einem b. Die Anordnung enthält weiter vier Untermultiplexer 409 bis 412 des Typs 74LS153. Die SEL-Eingänge dieser Untermultiplexer 409 bis 412 tragen jeweils das Bezugszeichen des zugehörigen Untermultiplexers mit einem b, während die MSB (most significant bit)-Eingänge Bezugszeichen mit einem a tragen. Die Anordnung enthält weiter ein Register 413 des Typs 74LS273, einen Pufferspeicher FIFO (First-In-First-Out-Memory) 414, bestehend aus zwei integrierten Schaltungen TDC1030 der Firma TRW, und einen Untermultiplexer 417 des Typs 74LS399.

Weiter ist eine Steuerung vorgesehen, die aus drei PROMs 422 des Typs 74S288, zwei Registern 423 und 424 des Typs 74LS273, einem Register 425 des Typs 74LS174, einem Zähler 427, bestehend aus zwei integrierten Schaltungen des Typs 74LS161, und einem UND-Gatter 426 besteht.

Eine Lesesteuerung enthält einen Zähler 428, bestehend aus drei integrierten Schaltungen des Typs 74LS161, UND-Gatter 420 und 429, einen Zähler 430, einen Inverter 431, einen Unterdecodierer 432, ein Exklusiv-ODER-Gatter 433 und ein D-Flipflop 434 und ein J-K-Flipflop 435. Ein Eingang 438 dient stets dem Empfang eines Worttaktes Luminanz.

Schließlich ist noch eine Lötbrücke 419 vorhanden, mittels der zwischen einem Betrieb für Luminanz-Signale L und einem Betrieb für Chrominanzfarbdifferenz-Signale C umgelötet werden kann.

An den Eingang 106/107 werden 3- oder 6-bit-Codewörter parallel an die Untermultiplexer 401 bis 408 angelegt. Der Steuerung 422 wird über dan Eingang 108/109 mitgeteilt, ob ein 3- oder ein 6-bit-Codewort anliegt. Die Steuerung erzeugt an den Registern 423 und 424 Takt- und Auswahlsignale für die Untermultiplexer 401 bis 408, daß die 3- und 6-bit-Codewörter als eine kontinuierliche Folge in den Registern der Untermultiplexer 401 bis 408 stehen. Die Ausgänge dieser Register sind in einer bestimmten Reihenfolge mit den Eingängen der Untermultiplexer 409 bis 412 verbunden. Diese Verbindungen sind mit zweistelligen Zahlen bezeichnet. Die SEL-Eingänge 409b bis 412b und die MSB-Eingänge 409a bis 412a werden vom Register 425 gemeinsam derart angesteuert, daß die 3- oder 6-bit-Codewörter zu einem 8-bitparallelen Datenstrom zusammengefaßt werden, der im Register 413 zwischengespeichert wird. Wenn aus 3- oder 6-bit-Codewörtern ein 8-bit-Codewort gebildet werden kann, dann gibt die Steuerung am Ausgang des UND-Gatters 426 einen Shift-IN-Impuls SI aus, der über die Klemme 415 das gerade anliegende 8-bit-Codewort in den Pufferspeicher 414 übernimmt.

Die Register 423 bis 424 dienen dazu, die von ihnen abzugebenden Signale stabil zu halten, während die PROM-Ausgänge einschwingen. Die Impulse SIa werden im Zähler 427 gezählt. Wenn die maximale Anzahl von Impulsen SI in einer Zeile erreicht ist, werden keine weiteren Impulse SI mehr ausgegeben. Ein Zeilenanfangsimpuls am Eingang 309 setzt den Zähler 427 zurück.

Der Eingang für den Worttakt entweder für Luminanz oder für Chrominanz trägt auch hier das Bezugszeichen 307.

Durch einen Impuls SO bzw. SOa am Eingang 416 wird ein 8-bit-Codewort an den Ausgang des Pufferspeichers 414 gelegt. Da die nachfolgenden Schaltungen beispielsweise zur Datansicherung 4 bit parallel benötigen, wird über den Untermultiplexer 417 das aus dem Pufferspeicher 414 kommende 8-bit-Codewort in zwei 4-bit-Codewörter zerlegt. Mit Hilfe des Signals am Eingang 418 werden jeweils 4 bit zum Ausgang 437 des Untermultiplexers 417 durchgeschaltet.

Jede Bildzeile besteht aus fünfhundertzweiundzwanzig 4-bit-Codewörtern. Der Zähler 428 wird vom verzögerten Zeilenanfangssignal am Eingang 421 der von der Taktversorgung erzeugt wird, zurückgesetzt. Er öffnet für fünfhundertzweiundzwanzig Worttakte das UND-Gatter 429. Der Zähler 430 zählt bis fünf. Das Signal für den Eingang 418 wird direkt vom Zählerausgang abgegriffen. Das Signal SO und das Signal für den Ausgang 436 werden mit Hilfe des Unterdecodierers 432 und des Exklusiv-ODER-Gatters 433 erzeugt. Am Ausgang des UND-Gatters 420 liegt nach jeweils zehn von Zähler 430 gezählten Takten ein Signal SOa an.

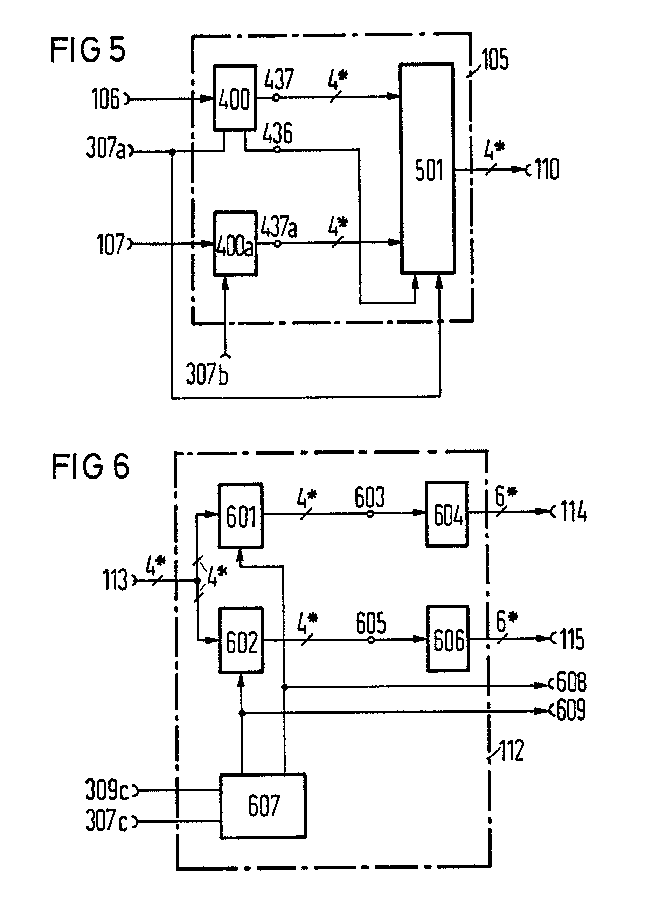

Figur 5 zeigt einen Multiplexer 105 mit einem Multiplexerteil 400 für Luminanz-Signale gemäß Figur 4, einen Multiplexerteil 400a für Chrominanzfarbdifferenz-Signale und einen Untermultiplexer 501 des Typs 74LS399. Dieser verschachtelt beide Signale, wie in Figur 2 gezeigt. Am Eingang 307a liegt der Worttakt für Luminanz und am Eingang 307b der Worttakt für Chrominanz. Dessen Frequenz beträgt ein Viertel der Frequenz des Worttaktes für Luminanz.

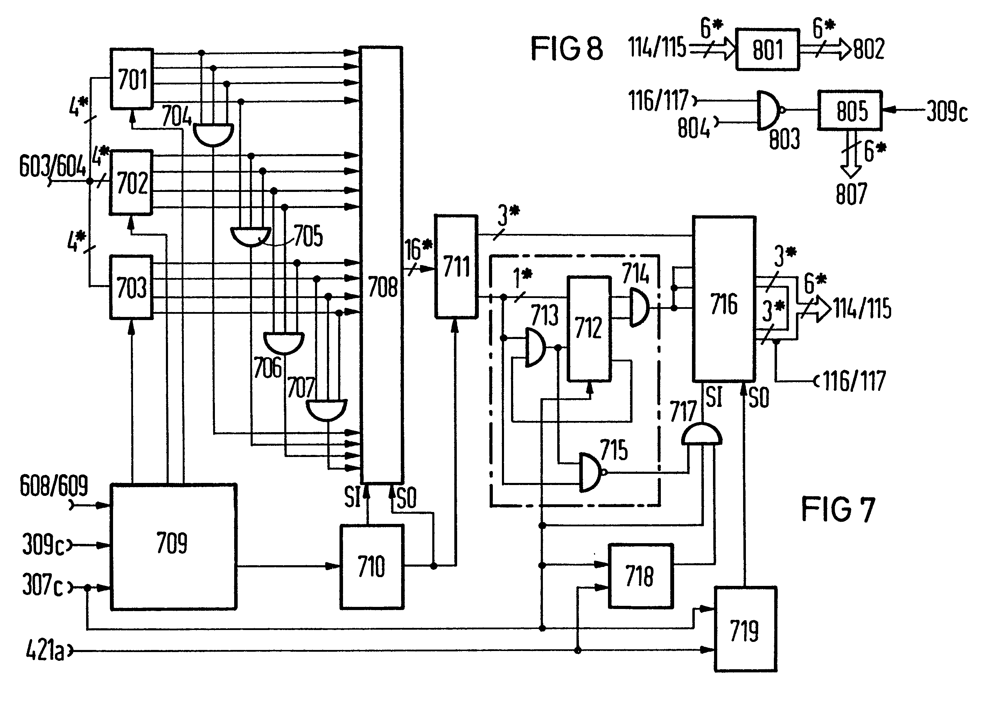

Figur 6 zeigt den Demultiplexer 112. Er enthält Register 601 und 602, die jeweils aus einer integrierten Schaltung 74LS175 bestehen, einen bis fünf zählenden Zähler 607, bestehend aus integrierten Schaltungen 74LS163 und 74LS11, zwei Demultiplexerteilen 604 und 606, die in Figur 7 dargestellt sind, und Ausgänge 608 und 609.

Die Anschlüsse 309c für die Zeilenanfangsimpulse und 307c für den Worttakt sind mit einer empfangsseitigen Taktversorgung verbunden.

Am Eingang 113 liegen 4-bit-Codewörter an. Der Zähler 607 steuert die Register 601 und 602 nun derart an, daß nacheinander vier Codewörter des Luminanz-Signals in das Register 602 und dann ein Codewort des Chrominanzfarbdifferenz-Signals in das Register 601 übernommen werden. Beide Register 601 und 602 trennen also das Luminanz- und das Chrominanzfarbdifferenz-Signal, so daß am Ausgang 114 das Chrominanzfarbdifferenz-Signal und am Ausgang 115 das Luminanz-Signal abgegeben werden kann.

Figur 7 zeigt die Demultiplexerteile 604 bzw. 606. Diese enthalten Register 701 bis 703, UND-Gatter 704 bis 707, bestehend aus integrierten Schaltungen 74LS11, einen Pufferspeicher Fifo 708, bestehend aus zwei integrierten Schaltungen TDC 1030 der Firma TRW, eine Steuerung 709, bestehend aus einem Zähler 74F163 und einem Decoder 74F139, und einen Zähler 710, bestehend aus zwei integrierten Schaltungen 74LS161. Die Anordnung enthält weiter einen Multiplexer 711, bestehend aus zwei integrierten Schaltungen 74F153, ein Register 712, bestehend aus einer integrierten Schaltung 74LS175, zwei UND-Gattern 713 und 714, bestehend aus integrierten Schaltungen 74LS08, ein NAND-Gatter 715, bestehend aus einer integrierten Schaltung 74LS00, einem Pufferspeicher Fifo 716, bestehend aus drei integrierten Schaltungen TDC 1030 der Firma TRW, ein UND-Gatter 717, bestehend aus einer integrierten Schaltung 74LS11, und Zähler 718 und 719, jeweils bestehend aus drei integrierten Schaltungen 74LS161.

Aus einem Register 601/602 stammende Daten liegen als 4-bit-Codewörter am Eingang 603/605 an. Die Register 701 bis 703 übernehmen jeweils ein 4-bit-Codewort mit dem Takt aus der Steuerung 709. Nach jeweils drei Worttakten stehen also zwölf bit an den Ausgängen der Regieter 701 bis 703 parallel an. Die Steuerung 709 liefert die Übernahme der Impulse für diese Register 701 bis 703.

Die Quellencodierung liefert sendeseitig Codewörter der Länge drei bit oder sechs bit. Ein 6-bit-Codewort beginnt in den Ausführungsbeispielen grundsätzlich mit "111". Mit Hilfe der UND-Gatter 704 bis 707 werden jeweils drei nebeneinander liegende Leitungen, auf das Wort "111" überprüft. Das Ergebnis wird zusätzlich zu den zwölf bit an den Ausgängen der Register 701 bis 703 in den Pufferspeicher Fifo 708 übernommen. Damit wird nachfolgenden Schaltungen mitgeteilt, ob und an welcher Stelle in dem entstehenden 12-bit-Codewort 6-bit-Quellencodewörter enthalten sind.

Der Zähler 710 erzeugt "Shift-In"-Impulse SI (Schreibimpulse) und "Shift-Out"-Impulse SO (Leseimpulse) für den Pufferspeicher 708; dessen Ausgang ist mit dem Multiplexer 711 verbunden. Dieser zerlegt die 16-bit-Code-wörter so, daß an seinem Ausgang jeweils drei Informationsbits erscheinen. Eine vierte Leitung signalisiert, ob die ersten drei Leitungen das Wort "111" enthalten. Falls ja, ist dies der Beginn eines 6-bit-Codeworts. Das nächste an dem Ausgang des Multiplexers 711 erscheinende 3-bit-Codewort ist dann der zweite Teil des 6-bit-Codeworts.

Die mit einer gestrichelten Linie umrahmte Schaltung wirkt wie folgt: Falls die oben angeführte vierte Informationsleitung das Bit "1" enthält, wird der nächste "Shift-In"-Impuls für den Pufferspeicher 716 unterdrückt und der zweite Teil des Quellen-Codeworts an dessen Eingang gelegt. In den Pufferspeicher 716 wird also entweder ein 6-bit-Quellencodewort "lllxxx" oder ein 3-bit-Quellencodewort "000xxx" übernommen. Mit x sind Informationsbits bezeichnet.

Der Zähler 718 erzeugt die, für den Pufferspeicher Fifo 716 erforderlichen "Shift-In"-Impulse und der Zähler 719 die "Shift-Out"-Impulse.

Die Ausgänge des Pufferspeichers 716 sind mit dem Eingang eines Decodierers 118 bzw. 119 verbunden.

Figur 8 zeigt einen Codeumsetzer. Auf diesen Codeumsetzer folgt ein aus den eingangs genannten Druckschriften bekannter Rest-Decodierer.

Die Anordnung enthält einen programmierbaren Festwertspeicher (PROM) 801, ein NAND-Gatter 803 und einen Zähler 805, bestehend aus zwei integrierten Schaltungen des Typs 74LS161.

Am Eingang 114/115 liegen die aus dem Pufferspeicher 716 in Figur 7 kommenden 3- oder 6-bit-Codewörter an. Zusätzlich liegt am Eingang 116/117 ein Signal an, welches angibt, ob auf den sechs parallelen Leitungen des Eingangs 114 bzw. 115 ein 3- oder ein 6-bit-Codewort anliegt. Der programmierbare Festwertspeicher 801 decodiert das 6-bit-Codewort in die Nummer der zugehörigen nachfolgenden bekannten und nicht dargestellten Quantisierungsstufe, die dann am Ausgang 802 in die nachfolgende Schaltung abgegeben wird. Das Signal am Eingang 116/117 öffnet das NAND-Gatter 803, so daß der Zähler 805 mit dem Bildpunkttakt am Eingang 806 weiterzählt. Am Ausgang 807 steht die Anzahl der in der aktuellen Bildzeile bereits empfangenen 6-bit-Codewörter an. Der Zähler 805 wird zu Beginn jeder Zeile mit einem Zeilenimpuls am Eingang 309c zurückgesetzt. Der Zählerstand des Zählers 805 wird in einer Anordnung entsprechend Figur 3 untere Hälfte bearbeitet. Von dieser Anordnung aus wird ein Umschalter im nachfolgenden Teil des Decodierers 118 oder 119 betätigt.

## Patentansprüche

1. Anordnung zur Übertragung von in Luminanz und Chrominanz getrennte synchronen Fernseh-Komponenten-Signalen, mit Codierern (103, 104), die die Luminanz- und Chrominanz-Signale in Wörter variabler Länge umsetzen und mit Decodierern (118, 119), die die Codewörter variabler Länge wieder rückumsetzen,
dadurch gekennzeichnet,
daß sendeseitig ein Multiplexer (105) vorgesehen ist, der von den Codierern (103, 104) gesteuert, die Luminanz- und Chrominanz-Signale in Pulsrahmen verschachtelt, die für diese beiden Signalarten alternierend einen oder mehrere feste Plätze enthalten, und
daß empfangsseitig ein Demultiplexer (112) vorgesehen ist, der die Luminanz- und Chrominanz-Signale wieder trennt.

2. Anordnung nach Anspruch 1,
dadurch gekennzeichnet,
daß die Abtastrate der Luminanz-Signale ein ganzzahliges Vielfaches m/n der Abtastrate der Chrominanz-Signale ist und
daß ein Pulsrahmen gewählt ist, in dem auf je m bit Luminanz-Signale je n bit Chrominanz-Signal folgt.

## Revendications

1. Dispositif pour la transmission de composantes de signaux synchrones de télévision, séparés du point de vue de la luminance et de la chrominance, comportant des codeurs (103, 104) qui convertissent les signaux de luminance et de chrominance en mots de longueurs variables, ainsi que des décodeurs (118, 119) qui reconvertissent les mots de code de longueurs différentes, caractérisé par le fait qu'il est prévu, côté émission, un multiplexeur (105) qui, commandé par les codeurs (103, 104), procède à la co-canalisation des signaux de luminance et de chrominance, en trames d'impulsions qui contiennent, pour ces deux genres de signaux, alternativement un ou plusieurs emplacements fixes, et qu'il est prévu, côté réception, un démultiplexeur (112) qui sépare à nouveau les signaux de luminance et de chrominance.

2. Dispositif selon la revendication 1, caractérisé par le fait que la vitesse d'échantillonnage du signaux de luminance est un multiple entier m/n de la vitesse d'échantillonnage des signaux de chrominance, et que l'on choisit une trame d'impulsions dans laquelle à m bits de signaux de luminance font suite respectivement n bits de signaux de chrominance.

**Claims**

1. An arrangement for transmitting synchronous television signal components which are separated into luminance and chrominance, with coders (103,104) which convert the luminance- and chrominance signals into words of variable length, and with decoders (118,119) which re-convert the codeworde of variable length,
characterised in that at the transmitting end a multiplexer (105) is provided which, controlled by the coders (103,104) internests the luminance- and chrominance signals in pulse frames which alternately contain one or more than one permanent location for these two signal types and
that at the receiving end a demultiplexer (112) is provided which re-separates the luminance- and chrominance signals.
2. An arrangement as claimed in claim 1, characterieed in that the scanning rate of the luminance signals is a whole-numbered multiple m/n of the scanning rate of the chrominance signals and that a pulse frame is selected in which m bits of luminance signals are followed by n bits of chrominance signals.

FIG 1

FIG 2

FIG 3

# FIG 4

400,400a

FIG 5

FIG 6

FIG 8

FIG 7

0 148 460